# EUROPEAN PATENT SPECIFICATION

(11) **EP 0 712 191 B1**
(45) Date of publication and mention of the grant of the patent: **13.01.1999**
(21) Application number: 95117097.6
(22) Date of filing: 30.10.1995
(51) Int. Cl.: H02G 3/26, F16L 3/00

(54) **Ceiling fastener**
Deckenträger
Attache de plafond

(30) Priority: 10.11.1994 FI 945297
(43) Date of publication of application: 15.05.1996
(73) Proprietor: Nordic Aluminium Oyj, 02401 Kirkkonummi (FI)
(72) Inventor: Lehtimaki, Pasi, FIN-05880 Hyvinkaa (FI)
(74) Representative: Howden, Christopher Andrew

(56) References cited:
- EP-A- 0 108 222
- DE-A- 4 137 618
- DE-U- 9 108 822

## Description

The invention relates to a ceiling fastener arranged to be fastened to the ceiling or the like and arranged to support a shelf structure, especially a ceiling fixing rail holding up cable shelves.

Such ceiling fasteners are nowadays very common in different fields of technology. Ceiling fasteners are used for example to support shelves that hold up cables, i.e. in installations where cables are mounted to travel up near the ceiling or the like.

Previously known ceiling fasteners have been rather difficult to install. In connection with previously known ceiling fasteners, it has been necessary to perform several difficult and time-consuming finishing steps, such as drillings and the like, on the site, so that the final product has become costly. In addition to the high costs, the mounting has often been slow, which has also added to the costs. Another factor increasing the costs is that different fasteners, each suited for a particular kind of rail, have often been utilised with different ceiling fixing rails. The manufacture of different fasteners increases the costs, wherefore the result is not the best possible.

DE-A-4137618 discloses a ceiling fastener arranged to be fastened to a ceiling to support a shelf structure, and comprising a first part of inverted U-shaped cross-section, adapted to be bolted to the ceiling and having welded thereto a second part in the form of a plate received in a cut-out in the first part, the plate having an aperture therethrough for passage of a ceiling fixing rail for supporting the shelf structure, the fixing rail having a flange at its upper end which lies flat against the second part and is bolted thereto.

The purpose of the invention is to provide a ceiling fastener by means of which the prior art drawbacks can be eliminated.

In accordance with the present invention, there is provided a ceiling fastener arranged to be fastened to the ceiling or the like and arranged to support a shelf structure, especially a ceiling fixing rail holding up cable shelves, the ceiling fastener comprising a first profile part and a second profile part, characterised in that the cross-sectional shape of the second profile part corresponds substantially to the shape of the outer surface of the cross-section of the ceiling fixing rail so that the end of the ceiling fixing rail can be fitted inside the second profile part and that the second profile part is attached to the first profile part by means of mechanical fastening means acting in the axial direction of the second profile part.

The primary advantage of the invention is that it helps to minimize the number of finishing steps required at the place of assembly. The decrease in the number of finishing steps provided by the invention can be illustrated by means of a previously used arrangement wherein eight holes have had to be drilled during the assembly on the site. The present invention provides a similar structure as the aforementioned previously known arrangement with no drillings required on the site. The advantages are thus quite essential in practice. Another advantage of the invention is that the fastener is inexpensive to produce since both profile parts can be manufactured by the metre so that the costs of a single fastener are very low.

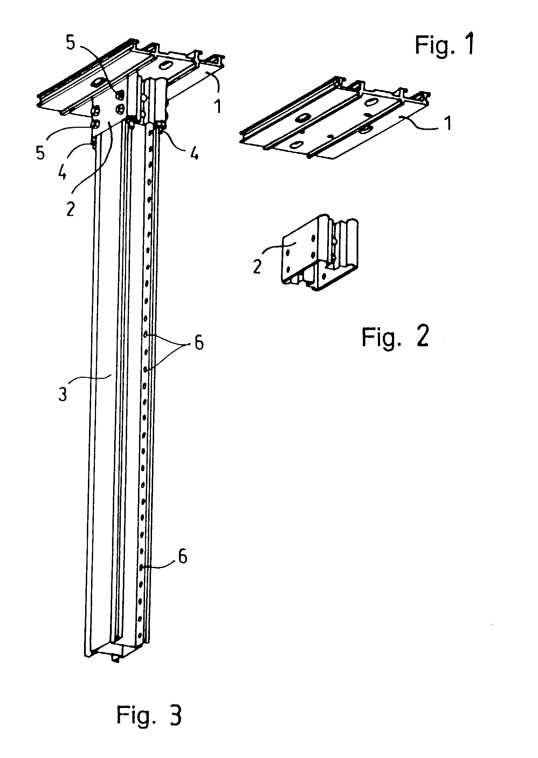

The invention will be described in greater detail below by means of a preferred embodiment shown in the accompanying drawing, in which
Figure 1 is a general perspective view of the first profile part of the fastener according to the invention,
Figure 2 is a general perspective view of the second profile part of the fastener according to the invention, and
Figure 3 is a general perspective view of the fastener according to the invention, assembled and provided with a ceiling fixing rail.

The figures show the basic features of the ceiling fastener according to the invention. Reference numeral 1 denotes the first profile part and reference numeral 2 correspondingly denotes the second profile part. Reference numeral 3 denotes the ceiling fixing rail.

The purpose of the above-described structure is to suspend different kinds of shelves, such as cable shelves, from the ceiling or some other corresponding plane. The shelves are suspended by attaching ceiling fasteners to the ceiling or the like, and by fastening to the ceiling fasteners ceiling fixing rails on which the shelves are attached. The above-described matters constitute fully conventional technology for a person skilled in the art, wherefore they will not be described in greater detail in this connection.

The essential idea of the invention is that the ceiling fastener is formed of a first and a second profile part 1, 2 by attaching the second profile part 2 to the first profile part 1 by means of mechanical fastening means 4 acting in the axial direction of the second profile part 2.

The second profile part 2 is selected in such a way that its cross-section substantially corresponds to the shape of the outer surface of the cross-section of the ceiling fixing rail 3. The second profile part 2 is also designed in such a way that the ceiling fixing rail 3 can be pushed inside the second profile part 2.

The mechanical fastening means 4 may be for example bolt means. Bolt means refer here to bolts, combinations of bolts and nuts, etc. It has been found especially advantageous to adjust the bolt means to extend over the length of the second profile part 2. The bolt means can then be advantageously made to press the second profile part 2 against the first profile part 1, while the bolt means rest on the free end of the second profile part. A jointing structure that is highly advantageous with respect to tensile strength is thus achieved. There are preferably four bolt means and they can be positioned in the corner areas of the second profile part 2, for example in channels, or the like, formed by the inner surface of this profile part.

The first and the second profile part 1, 2 can be produced of any suitable material. It has been found especially advantageous to prepare the profile parts of extruded aluminium profiles, since the profiles can then be manufactured in a continuous process. The extruded profiles are naturally cut to the correct length in a suitable manner.

The basic idea of the invention is thus that the second profile part 2 is attached to the first profile part by means of an axial bolted joint, thus producing a finished ceiling fastener in an advantageous manner. The fastening of the profile parts to each other can be performed advantageously under favourable conditions, and not under the difficult conditions existing normally on the site of assembly. The first profile part 1 is naturally provided with holes via which the bolts joining the profile parts can be made to pass through the first profile part 1. The ceiling fastener achieved in the aforementioned manner is attached to the ceiling or the like in a suitable manner, for example through bolting. For the purpose of fixing, the first profile part can also be provided beforehand with holes for the fastening bolts.

After the ceiling fastener has been fixed, the ceiling fixing rail 3 can be pushed into the second profile part 2 and attached thereto by means of bolts 5 that are transverse with respect to the axial direction of the second profile part 2. The second profile part 2 is also provided beforehand with holes for the bolts 5. Corresponding holes are also provided in the ceiling fixing rail 3. In fact, it has been found advantageous to provide the entire length of the ceiling fixing rail 3 with holes 6 so that the same holes can be used both to fasten the ceiling fixing rail 3 to the second profile part and to attach the shelves or shelf supports to the ceiling fixing rail 3. Providing the entire length of the ceiling fixing rail with holes 6 ensures that the rail can be freely cut at a desired point without any problems occurring in the fastenings.

The above-described embodiment is not intended to limit the invention in any way, but the invention can be modified quite freely within the scope of the claims. Therefore it is clear that the ceiling fastener according to the invention or its details do not necessarily have to be identical to those shown in the figures, but other kinds of arrangements can also be used. For example the shapes and measures of the profiles used for producing the profile parts can naturally be selected quite freely in each occasion.

The features disclosed in the foregoing description, in the following claims and/or in the accompanying drawings may, both separately and in any combination thereof, be material for realising the invention in diverse forms thereof.

## Claims

1. A ceiling fastener arranged to be fastened to the ceiling or the like and arranged to support a shelf structure, especially a ceiling fixing rail holding up cable shelves, the ceiling fastener comprising a first profile part (1) and a second profile part (2), characterised in that the cross-sectional shape of the second profile part (2) corresponds substantially to the shape of the outer surface of the cross-section of the ceiling fixing rail (3) so that the end of the ceiling fixing rail can be fitted inside the second profile part (2) and that the second profile part (2) is attached to the first profile part (1) by means of mechanical fastening means (4) acting in the axial direction of the second profile part.

2. A ceiling fastener according to claim 1, characterised in that the mechanical fastening means (4) are bolt means.

3. A ceiling fastener according to claim 2, characterised in that the bolt means are arranged to extend over the length of the second profile part (2) and to press the second profile part (2) against the first profile part (1), while the bolt means rest on the free end of the second profile part.

4. A ceiling fastener according to claim 2 or 3, characterised in that there are four bolt means and that they are arranged in the corner areas of the second profile part (2).

5. A ceiling fastener according to any one of the preceding claims, characterised in that the first and the second profile part (1, 2) are formed of extruded aluminium profiles.

6. A ceiling fastener according to any one of the preceding claims, **characterized** in that the ceiling fixing rail (3) is arranged to be fastened to the second profile part (2) by means of bolts (5) that are transverse with respect to the axial direction of the second profile part.

## Patentansprüche

1. Decken-Befestigungseinrichtung, die zur Befestigung an einer Decke oder dergleichen sowie zum Tragen einer Gestellkonstruktion ausgebildet ist, bei der es sich insbesondere um eine Decken-Fixierschiene handelt, die Kabelgestelle trägt, wobei die Decken-Befestigungseinrichtung ein erstes Profilteil (1) und ein zweites Profilteil (2) aufweist,
dadurch gekennzeichnet,
daß die Querschnittsgestalt des zweiten Profilteils (2) im wesentlichen der Formgebung der Außenoberfläche des Querschnitts der Decken-Fixierschiene (3) entspricht, so daß sich das Ende der Decken-Fixierschiene in das zweite Profilteil (2) einpassen läßt,
und daß das zweite Profilteil (2) an dem ersten Profilteil (1) mittels mechanischer Befestigungseinrichtungen (4) angebracht ist, die in der Axialrichtung des zweiten Profilteils wirken.

2. Decken-Befestigungseinrichtung nach Anspruch 1,
dadurch gekennzeichnet,
daß es sich bei den mechanischen Befestigungseinrichtungen (4) um Bolzeneinrichtungen handelt.

3. Decken-Befestigungseinrichtung nach Anspruch 2,
dadurch gekennzeichnet,
daß die Bolzeneinrichtungen derart ausgebildet sind, daß sie sich über die Länge des zweiten Profilteils (2) erstrecken sowie das zweite Profilteil (2) gegen das erste Profilteil (1) pressen, wobei die Bolzeneinrichtungen an dem freien Ende des zweiten Profilteils anliegen.

4. Decken-Befestigungseinrichtung nach Anspruch 2 oder 3,
dadurch gekennzeichnet,
daß vier Bolzeneinrichtungen vorhanden sind und daß diese in den Eckbereichen des zweiten Profilteils (2) angeordnet sind.

5. Decken-Befestigungseinrichtung nach einem der vorausgehenden Ansprüche,
dadurch gekennzeichnet,
daß das erste und das zweite Profilteil (1, 2) aus extrudierten Aluminiumprofilen gebildet sind.

6. Decken-Befestigungseinrichtung nach einem der vorausgehenden Ansprüche,
dadurch gekennzeichnet,
daß die Decken-Fixierschiene (3) dazu ausgebildet ist, an dem zweiten Profilteil (2) mittels Bolzen (5) befestigt zu werden, die in bezug auf die Axialrichtung des zweiten Profilteils in Querrichtung verlaufen.

## Revendications

1. Organe de fixation de plafond destiné à être fixé au plafond ou analogue et à supporter une structure d'étagères, notamment un rail de fixation de plafond supportant des étagères pour câbles, l'organe de fixation de plafond comprenant une première partie profilée (1) et une seconde partie profilée (2), caractérisé en ce que la configuration en coupe de la seconde partie profilée (2) correspond pratiquement à la configuration de la surface externe de la section du rail de fixation de plafond (3) afin que l'extrémité du rail de fixation de plafond puisse être logée dans la seconde partie profilée (2), et en ce que la seconde partie profilée (2) est fixée à la première partie profilée (1) par un dispositif mécanique de fixation (4) qui agit dans la direction axiale de la seconde partie profilée.

2. Organe de fixation de plafond selon la revendication 1, caractérisé en ce que le dispositif mécanique de fixation (4) est un dispositif à boulon.

3. Organe de fixation de plafond selon la revendication 2, caractérisé en ce que le dispositif à boulon est destiné à être disposé sur la longueur de la seconde partie profilée (2) et à repousser la seconde partie profilée (2) contre la première partie profilée (1) alors que le dispositif à boulon est en appui sur l'extrémité libre de la seconde partie profilée.

4. Organe de fixation de plafond selon la revendication 2 ou 3, caractérisé en ce qu'il comporte quatre dispositifs à boulon et ceux-ci sont placés dans les régions de coin de la seconde partie profilée (2).

5. Organe de fixation de plafond selon l'une quelconque des revendications précédentes, caractérisé en ce que la première et la seconde partie profilée (1, 2) sont formées de profilés d'aluminium formés par extrusion.

6. Organe de fixation de plafond selon l'une quelconque des revendications précédentes, caractérisé en ce que le rail de fixation de plafond (3) est destiné à être fixé à la seconde partie profilée (2) par des boulons (5) transversaux à la direction axiale de la seconde partie profilée.
